# EUROPEAN PATENT APPLICATION

(11) **EP 3 493 529 A1**
(43) Date of publication of application: **05.06.2019**
(21) Application number: 17834042.8
(22) Date of filing: 12.07.2017
(51) Int. Cl.: H04N 5/374, H04N 5/343, H04N 5/378

(54) **IMAGING CONTROL DEVICE, IMAGING CONTROL METHOD, AND IMAGING ELEMENT**

(30) Priority: 26.07.2016 JP 2016145904
(71) Applicant: Sony Corporation, Tokyo 108-0075 (JP)
(72) Inventor: MIYAKOSHI Daisuke, Tokyo 108-0075 (JP)
(74) Representative: D Young & Co LLP
(86) International application number: PCT/JP2017/025461
(87) International publication number: WO 2018/021034

(57) **Abstract**

The present disclosure relates to an imaging control apparatus, an imaging control method, and an imaging element for realizing seamless skipped readout.

Pixel reset is performed one row at a time for skipped rows for every horizontal synchronizing clock as in all-pixel readout mode. This permits proper readout even if the row to be read out changes in skipped readout mode. The present disclosure is applicable to an imaging apparatus.

## Description

### [Technical Field]

The present disclosure relates to an imaging control apparatus, an imaging control method, and an imaging element and particularly to an imaging control apparatus, an imaging control method, and an imaging element that prevent the occurrence of an invalid frame even during switching between readout modes while at the same time realizing power saving through row-by-row skipping.

### [Background Art]

Imaging elements represented by CMOS (Complementary Metal Oxide Semiconductor) image sensors are rapidly growing in number of pixels. While permitting realization of higher image quality, the increase in number of pixels of CMOS image sensors leads to larger power consumption associated with the acquisition of each screen (each image).

However, imaging elements frequently find their way into highly portable apparatuses, and batteries required to drive the imaging elements have their limits in size from the viewpoint of portability, leading to growing power saving needs on the imaging elements.

In the case of imaging of a video with an imaging element, a high quality image may not be necessarily needed depending on imaging conditions, and a technology has been proposed that, for an image captured under such conditions, realizes not only fast imaging but also power saving by reducing the image quality, which is made possible by skipping, during readout of pixels in a pixel array, a given number of rows (refer to PTL 1).

### [Citation List]

### [Patent Literature]

[PTL 1]
Japanese Patent Laid-Open No. 2010-183558

### [Summary]

### [Technical Problem]

In an imaging element controlled by a rolling shutter during row-by-row skipped readout of pixel signals from the pixel array as in the technology described in PTL 1, however, an invalid frame may occur due to a change in the row to be read out at the moment when the imaging element is switched over to a mode for skipping the pixel signals to be read out row by row or during switching between modes with different skipping row intervals, thus causing a sense of discomfort if one is viewing an image at the moment when mode switching takes place.

The present disclosure has been devised in light of the foregoing and suppresses the occurrence of an invalid frame during switching to a row-by-row skipping mode while at the same time maintaining power saving advantages achieved by row-by-row skipping particularly in the case of imaging of an imaging element represented by a CMOS image sensor using a rolling shutter.

### [Solution to Problem]

An imaging control apparatus of an aspect of the present disclosure includes a control section that controls readout, from a plurality of pixels arranged in an array form for accumulating charge proportional to an amount of incident light as a pixel signal, of the pixel signals. The control section controls, for all rows of the pixels, row-by-row reset of the plurality of pixels at a constant interval for each row and controls a pixel readout with the pixels skipped in units of a given number of rows.

A horizontal synchronizing clock signal generation section can be further included that generates a horizontal synchronizing clock signal for horizontally defining one column worth of processing, and the control section can be caused to sequentially perform the row-by-row reset of the pixels one row at a time for each of the horizontal synchronizing clock signals in synchronism with the horizontal synchronizing clock signal.

The control section can be caused to control the pixel readout with the pixels skipped in units of the given number of rows on the basis of a mode switching signal corresponding to an image quality mode of an image including pixel signals captured by the pixels.

A determination section, a setting section, a horizontal synchronizing clock signal generation section, a counter, and a comparison section can be further included. The determination section determines an operating state of the pixels. The setting section sets a mode switching signal that includes information regarding a value corresponding to the given number on a basis of a determination result of the determination section. The horizontal synchronizing clock signal generation section generates a horizontal synchronizing clock signal. The counter counts up on a basis of the horizontal synchronizing clock signal. The comparison section compares a value included in the mode switching signal set by the setting section and a value of the counter and generates a readout pulse when the two values match. The control section can be caused to read out, row by row, the pixels that have been reset on a basis of the readout pulse, and the counter can be reset when a value included in the mode switching signal set by the setting section and the counter value match.

A frame memory can be further included that chronologically stores images including pixel signals captured by the pixels, and the determination section can be caused to determine the operating state of the pixels through comparison between chronological images stored in the frame memory on a basis of presence or absence of a moving subject in the images.

In a case where the determination section determines, as the operating state of the pixels, that a moving subject is present in the image, the control section can be caused to control the pixel readout with the pixels skipped from an image including pixel signals captured by the pixels in units of a given number of rows on a basis of a mode switching signal corresponding to a given image quality mode, and in a case where the determination section determines, as the operating state of the pixels, that a moving subject is absent in the image, the control section can be caused to control the pixel readout with the pixels skipped from the image including pixel signals captured by the pixels in units of the given number of rows on a basis of a mode switching signal corresponding to an image quality mode whose quality is lower than the given image quality.

In a case where the determination section determines, as the operating state of the pixels, that a moving subject is present in the image, the setting section can be caused to set a mode switching signal including information regarding a first value as a value corresponding to the given number, and the control section can be caused to control the pixel readout with the pixels skipped from an image including pixel signals captured by the pixels in units of rows appropriate to the first value included in the mode switching signal corresponding to the given image quality mode, and in a case where the determination section determines, as the operating state of the pixels, that a moving subject is absent in the image, the setting section can be caused to set a mode switching signal including information regarding a second value larger the first value as a value corresponding to the given number, and the control section can be caused to control the pixel readout with the pixels skipped from an image including pixel signals captured by the pixels in units of rows appropriate to the second value included in the mode switching signal corresponding to an image quality mode whose quality is lower than the given image quality.

A drive battery can be further included, and the determination section can be caused to determine the operating state of the pixels on a basis of a level of the battery.

In a case where the determination section determines, on the basis of the level of the battery, and as the operating state of the pixels, that the level of the battery is higher than a given value, the control section can be caused to control the pixel readout with the pixels skipped from an image including pixel signals captured by the pixels in units of a given number of rows on a basis of a mode switching signal corresponding to a given image quality mode, and a case where the determination section determines, on the basis of the level of the battery, and as the operating state of the pixels, that the level of the battery is lower than the given value, the control section can be caused to control the pixel readout with the pixels skipped from the image including pixel signals captured by the pixels in units of the given number of rows on a basis of a mode switching signal corresponding to an image quality mode whose quality is lower than the given image quality.

In a case where the determination section determines, on the basis of the level of the battery, and as the operating state of the pixels, that the level of the battery is higher than a given value, the setting section can be caused to set a mode switching signal including information regarding a first value as a value corresponding to the given number, and the control section can be caused to control the pixel readout with the pixels skipped from an image including pixel signals captured by the pixels in units of rows appropriate to the first value included in the mode switching signal, and in a case where the determination section determines, on a basis of the level of the battery, and as the operating state of the pixels, that the level of the battery is lower than the given value, the setting section can be caused to set a mode switching signal including information regarding a second value larger the first value as a value corresponding to the given number, and the control section can be caused to control the pixel readout with the pixels skipped from an image including pixel signals captured by the pixels in units of rows appropriate to the second value included in the mode switching signal corresponding to an image quality mode whose quality is lower than the given image quality.

A horizontal synchronizing clock signal generation section can be further included that generates a horizontal synchronizing clock signal for horizontally defining one column worth of processing, and when the pixel readout is performed through the row-by-row skipping in such a manner as to read out the pixels one row every m row, the pixel readout can be performed at a time interval m times a horizontal synchronizing clock signal.

The control section can be caused to reset or read out a plurality of pixels row by row through a rolling shutter scheme.

A CMOS image sensor can be used as the plurality of pixels.

An imaging control method of an aspect of the present disclosure includes a control step of controlling readout, from a plurality of pixels arranged in an array form for accumulating charge proportional to an amount of incident light as a pixel signal, of the pixel signals, and processes of the control step control, for all rows of the pixels, row-by-row reset of the plurality of pixels at a constant interval for each row and control the pixel readout with the pixels skipped in units of a given number of rows.

An imaging element of an aspect of the present disclosure includes a control section that controls readout, from a plurality of pixels arranged in an array form for accumulating charge proportional to an amount of incident light as a pixel signal, of the pixel signals. The control section controls, for all rows of the pixels, row-by-row reset of the plurality of pixels at a constant interval for each row and controls the pixel readout with the pixels skipped in units of a given number of rows.

In an aspect of the present disclosure, pixel readout of pixel signals from a plurality of pixels is controlled. The pixels are arranged in an array form and accumulate charge proportional to an amount of incident light as a pixel signal. Row-by-row reset of the plurality of pixels is controlled for all pixel rows at a constant interval for each row, and the pixel readout is controlled with the pixels skipped in units of a given number of rows.

### [Advantageous Effect]

According to an aspect of the present disclosure, it is possible to suppress the occurrence of an invalid frame at the moment of switching to a row-by-row skipping mode and during switching between modes with different skipping row intervals while at the same time maintaining power saving advantages achieved by skipping.

### [Brief Description of Drawings]

Fig. 1 is a diagram describing conventional skipped readout.
Fig. 2 is a diagram describing skipped readout to which the present disclosure is applied.
Fig. 3 is a diagram describing a configuration example of an imaging apparatus of the present disclosure.
Fig. 4 is a diagram describing a configuration example of an image sensor illustrated in Fig. 3.
Fig. 5 is a diagram describing a configuration example of a pixel circuit.
Fig. 6 is a diagram describing a configuration example of a readout pulse generation section.
Fig. 7 is a timing chart describing operation of the readout pulse generation section.
Fig. 8 is a flowchart describing an operation control process performed by the imaging apparatus illustrated in Fig. 3.
Fig. 9 is a flowchart describing a readout/reset instruction process.
Fig. 10 is a diagram describing the readout/reset instruction process.
Fig. 11 is a diagram describing the readout/reset instruction process.
Fig. 12 is a timing chart describing an all-pixel readout mode when a factor n is set to 4.
Fig. 13 is a timing chart describing 1/3-row readout mode when the factor n is set to 4.
Fig. 14 is a timing chart describing 1/5-row readout mode when the factor n is set to 4.
Fig. 15 is a flowchart describing other operation control process performed by the imaging apparatus illustrated in Fig. 3.
Fig. 16 is a diagram describing other configuration example of the imaging apparatus to which the present invention is applied.

### [Description of Embodiment]

A detailed description will be given below of a preferred embodiment of the present disclosure with reference to the attached drawings. It should be noted that, in the present specification and the drawings, the configuration elements having substantially the same functional configuration are denoted by the same reference sign to omit redundant description.

### <<1. Summary of the Imaging Apparatus of the Present Disclosure>>

### <General Skipping in Rolling Shutter>

In describing the summary of the imaging apparatus to which the present disclosure is applied, general skipping in rolling shutter will be described first.

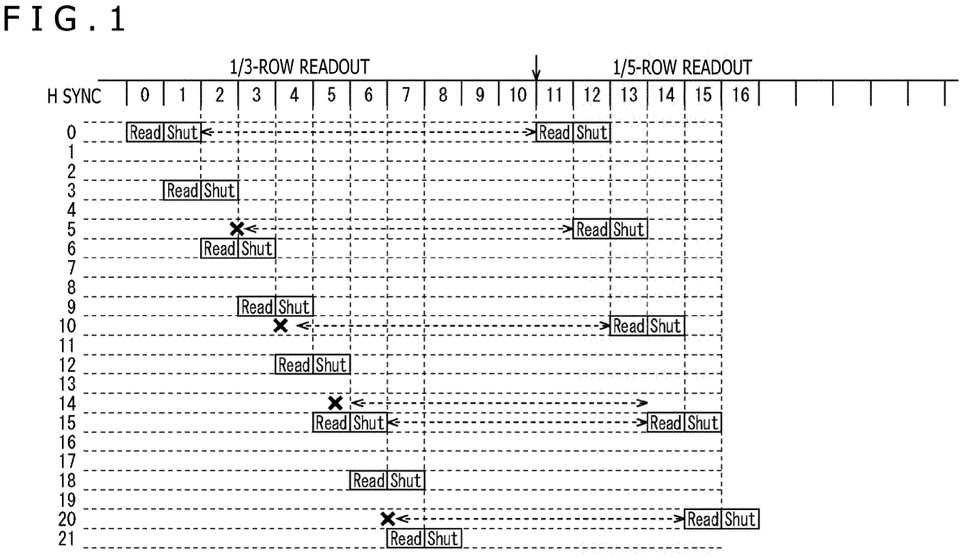

Fig. 1 is a diagram describing timings for reading out pixel signals arranged in a pixel array. Depicted at the top in Fig. 1 are first, second, third, and subsequent clocks of a horizontal synchronizing clock (H SYNC) that occur chronologically to the right. Also depicted are row numbers of the pixels to be processed, and the zeroth, first, second and following rows are given sequentially from top in Fig. 1.

Also, Fig. 1 depicts, for the first to tenth clocks of the horizontal synchronizing clock (H SYNC), pixel reset timings (Shut in Fig. 1) and pixel readout timings (Read in Fig. 1) in 1/3-row readout mode, i.e., a mode in which the rows to be read out are curtailed to 1/3. Further, Fig. 1 depicts, for 11th to 16th clocks of the horizontal synchronizing clock, pixel reset timings (Shut in Fig. 1) and pixel readout timings (Read in Fig. 1) in 1/5-row readout mode, i.e., a mode in which the rows to be read out are curtailed to 1/5.

That is, as illustrated in Fig. 1, in 1/3-row readout mode, the pixels in the zeroth row are read out at the zeroth clock of the horizontal synchronizing clock.

Then, at the first clock of the horizontal synchronizing clock, the next timing, the pixels in the zeroth row are reset (Shut), and at the same time, the pixels in the third row, three rows ahead, are read out (Read) .

Further, at the second clock of the horizontal synchronizing clock, the next timing, the pixels in the third row are reset (Shut), and at the same time, the pixels in the sixth row, three rows ahead, are read out (Read).

Also, at the fourth clock of the horizontal synchronizing clock, the next timing, the pixels in the ninth row are reset, and at the same time, the pixels in the 12th row, three rows ahead, are read out.

From here onwards, as the horizontal synchronizing clock progresses, sequential repetitions occur, and pixel reset and pixel readout are repeated with a shift of three rows. When the repetition reaches the lowermost row, the similar processes are repeated from the uppermost row for a new frame.

It should be noted that Fig. 1 illustrates processing down to a 21st row.

Here, for example, when the tenth clock of the horizontal synchronizing clock is complete, 1/3-row readout mode is switched to 1/5-row readout mode as illustrated in Fig. 1, causing the pixels in the zeroth row to be read out at the 11th clock of the horizontal synchronizing clock.

Then, at the 12th clock of the horizontal synchronizing clock, the next timing, the pixels in the zeroth row are reset, and at the same time, the pixels in the fifth row, five rows ahead, are read out.

Further, at the 13th clock of the horizontal synchronizing clock, the next timing, the pixels in the fifth row are reset, and at the same time, the pixels in the tenth row, five rows ahead, are read out.

Also, at the 14th clock of the horizontal synchronizing clock, the next timing, the pixels in the tenth row are reset, and at the same time, the pixels in the 15th row, five rows ahead, are read out.

Further, at the 15th clock of the horizontal synchronizing clock, the next timing, the pixels in the 15th row are reset, and at the same time, the pixels in the 20th row, five rows ahead, are read out.

That is, as the horizontal synchronizing timing progresses, sequential repetitions occur, and pixel reset and pixel readout are repeated with a shift of five rows. When the repetition reaches the lowermost row, the processes restart from the uppermost row.

However, although, after switching to 1/5-row readout mode, the pixels in the zeroth row are read out at the 11th clock of the horizontal synchronizing clock, the pixel signals of the fifth, tenth, 15th, and 20th rows read out at the 12th to 15th clocks of the horizontal synchronizing clock, respectively, were not subjected to pixel reset in 1/3-row readout mode as depicted by crosses.

Also, even if we assume that pixel reset was performed at the timings depicted by crosses in Fig. 1, exposure times for the pixel signals of the fifth, tenth, 15th, and 20th rows read out at the 12th to 15th clocks of the horizontal synchronizing clock, respectively, are, on a frame surface immediately after a mode change, from the second clock to the 11th clock, from the fourth clock to the 13th clock, from the sixth clock to the 14th clock, and from the seventh clock to the 15th clock of the horizontal synchronizing clock, respectively, resulting in variation of the accumulation time (exposure time) and rendering these pixel signals unfit for use.

That is, as illustrated in Fig. 1, pixel reset is not performed in the rows skipped. Therefore, a slope representing the change in row number to be read out is not consistent with the change in the horizontal synchronizing clock at the readout timings in 1/3- and 1/5-row readout modes.

This renders frame images immediately after the mode switching unfit for use, resulting in a wasted frame (invalid frame) and possibly causing a sense of discomfort.

For this reason, in the present disclosure, pixel reset is also performed in the rows skipped at similar timings to those of the pixel reset for the rows to be read out. This ensures that the accumulation time (exposure time) is the same for all the rows. As a result, even if the rows to read out change with change in mode, the pixels are read out properly in any row, making it possible to suppress the occurrence of an abandoned frame (invalid frame).

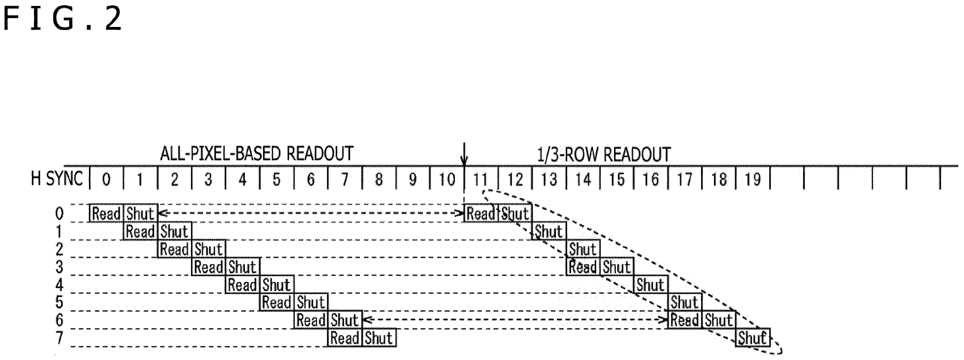

Going into more details, in the case where all-pixel readout mode with no skipping is switched to 1/3-row readout mode at the 11th clock of the horizontal synchronizing clock as illustrated in Fig. 2, although the pixels in the zeroth, third, sixth rows are read out (Read) at intervals of three rows at the 11th, 14th, and 17th clocks of the horizontal synchronizing clock, respectively, after the switching to 1/3-row readout mode, the pixels are reset (shut) in all the rows every horizontal synchronizing clock as depicted by dotted circles.

As a result, even if the mode changes, the pixel signals at the times of pixel readout of the zeroth, third, sixth have the same exposure time. Here, assuming that pixel reset is a front curtain and pixel readout is a rear curtain in a focal plane shutter, a shutter speed (curtain speed) is rendered constant. Also, even if pixel reset is performed with a sequential shift of one row every horizontal synchronizing clock at a time for all the rows including the skipped rows, the pixels are not read out in the rows skipped. As a result, AD conversion does not take place, making it possible to achieve power saving as has been done to date. Also, this provides a constant gap between the front and rear curtains. Therefore, even in the case where a focal plane distortion occurs, the distortion can be always corrected by the same measure, thereby suppressing workload for implementation.

### <<2. Configuration Example of the Imaging Apparatus to Which the Present Disclosure Is Applied>>

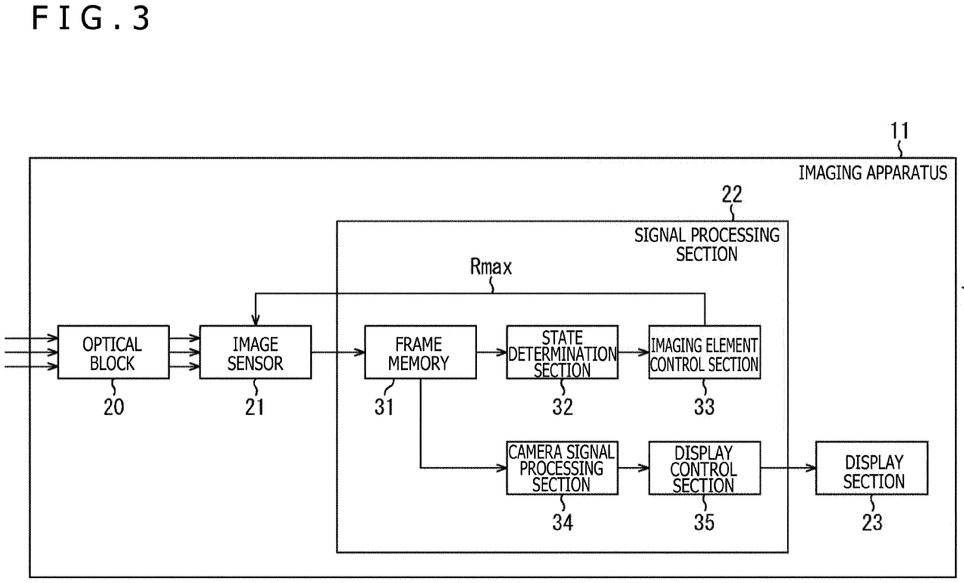

A description will be given next of a configuration example of the imaging apparatus to which the present disclosure is applied with reference to the block diagram illustrated in Fig. 3.

An imaging apparatus 11 illustrated in Fig. 3 includes an optical block 20, an image sensor 21, a signal processing section 22, a display section 23, and an operation section 24.

The optical block 20 includes a plurality of lenses and forms a subject image on an imaging surface of the image sensor 21 by collecting incident light from the subject.

The image sensor 21 includes, for example, a CMOS (Complementary Metal Oxide Semiconductor) image sensor, generates an image by sequentially transferring pixel signals row by row through a rolling shutter scheme, and supplying the image to the signal processing section 22. When causing a live view image or other image to be displayed, the image sensor 21 ensures power saving by skipping rows involved in AD conversion while at the same time achieving fast imaging by acquiring information instructing the above change in operation mode from the signal processing section 22 and performing readout of the pixel array with the pixels skipped in units of a given number of rows.

The signal processing section 22 includes, for example, an LSI (Large Scale Integration) and causes an image signal, supplied from the image sensor 21, to be displayed on the display section 23 including LCD (Liquid Crystal Display) by performing given processes on the image signal. Also, the signal processing section 22 accepts information regarding the operation mode of the image sensor 21 on the basis of an operation signal supplied when the operation section 24 including operating buttons is operated and supplies a mode switching signal for switching between the operation modes to the image sensor 21 in accordance with the state of the image supplied and so on.

Going into more details, the signal processing section 22 includes a frame memory 31, a state determination section 32, an imaging element control section 33, a camera signal processing section 34, and a display control section 35.

The frame memory 31 stores at least two or more frames of images supplied from the image sensor 21 and supplies the images to the state determination section 32.

The state determination section 32 determines whether or not moving subject high image quality mode has been set by manipulation of the operation section 24, and in the case where a moving subject high image quality mode has been set, the state determination section 32 sequentially reads out the images stored in the frame memory 31 and determines whether or not a moving subject is present by performing, for example, motion detection. Then, when determining that a moving subject is present, the state determination section 32 supplies, to the imaging element control section 33, information indicating the need to switch to a high image quality mode. On the other hand, when a moving subject high image quality mode has been set, or a moving subject is not present, the state determination section 32 supplies, to the imaging element control section 33, information indicating the need to switch to a non-high-image-quality mode (low image quality mode, for example).

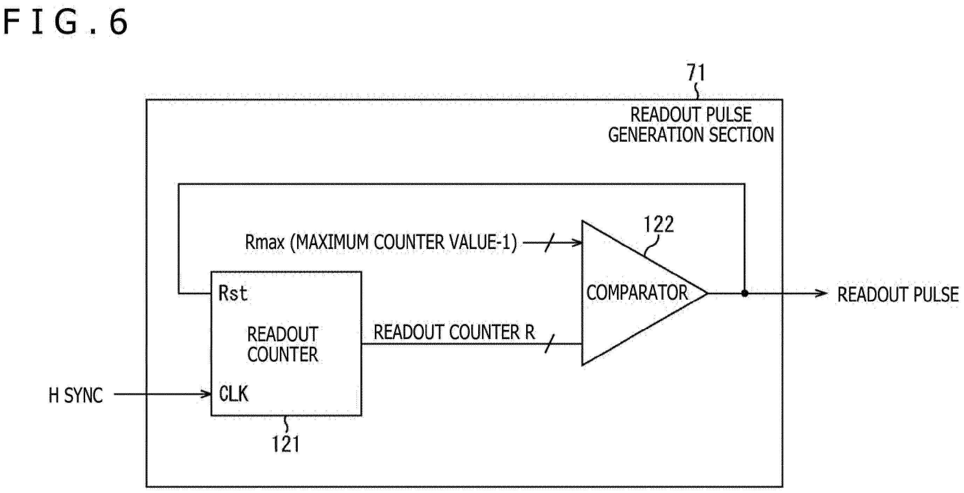

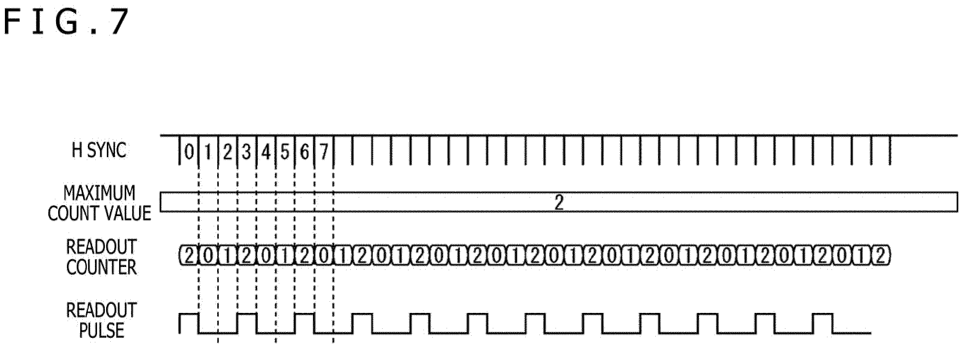

The imaging element control section 33 supplies, to the image sensor 21, a mode switching signal specifying the number of rows to be skipped to match the image quality mode supplied from the state determination section 32. More specifically, for example, in the case of 1/5-row readout, the imaging element control section 33 supplies a mode switching signal Rmax=4 as a maximum value for counting the number of rows to be skipped. Similarly, in the case of 1/3-row readout, the imaging element control section 33 supplies the mode switching signal Rmax=2. Further, in the case of all-pixel readout, the imaging element control section 33 supplies the mode switching signal Rmax=0. It should be noted that the mode switching signal Rmax will be described in detail later with reference to Figs. 6 and 7.

### <Configuration Example of the Image Sensor>

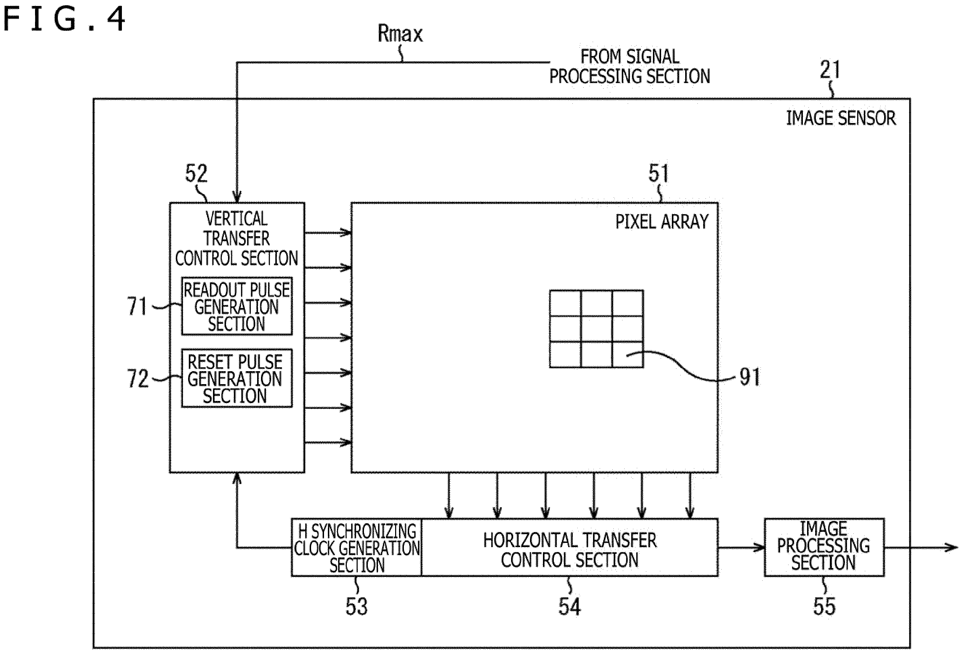

A description will be given next of a configuration example of the image sensor 21 illustrated in Fig. 3 with reference to the block diagram illustrated in Fig. 4.

The image sensor 21 includes, for example, a pixel array 51, a vertical transfer control section 52, an H synchronizing clock (horizontal synchronizing clock) generation section 53, a horizontal transfer control section 54, and an image processing section 55.

The pixel array 51 has pixels 91 arranged in an array form, and the pixels 91 generate pixel signals in proportion to the amount of incident light. The operation of the pixels 91 is controlled row by row on the basis of a control signal supplied from the vertical transfer control section 52, and the generated pixel signals are supplied sequentially to the horizontal transfer control section 54.

The vertical transfer control section 52 generates a control signal for controlling pixel reset and pixel readout performed, row by row, on the pixels 91 included in the pixel array 51. Going into more detail, the vertical transfer control section 52 includes a readout pulse generation section 71 and a reset pulse generation section 72.

The readout pulse generation section 71 generates a pulse signal for controlling timings to perform, row by row, readout of the pixels in a given row among the pixels 91 of the pixel array 51 on the basis of an H synchronizing clock (horizontal synchronizing signal) supplied from the H synchronizing clock generation section 53.

The reset pulse generation section 72 generates a pulse signal for controlling timings to perform reset of the pixels (photodiodes) in a given row among the pixels 91 of the pixel array 51 on the basis of an H synchronizing clock (horizontal synchronizing signal) supplied from the H synchronizing clock generation section 53.

The H synchronizing clock generation section 53 generates an H synchronizing clock (horizontal synchronizing signal) and supplies the clock to the vertical transfer control section 52 and the horizontal transfer control section 54.

The horizontal transfer control section 54 sequentially perform A/D (Analog/Digital) conversion of pixel signals sequentially supplied, row by row, from the pixel array 51 on the basis of an H synchronizing clock (horizontal synchronizing signal) supplied from the H synchronizing clock generation section 53, transfers the pixel signals horizontally, and supplies the pixel signals to the image processing section 55 row by row.

The image processing section 55, for example, sequentially accumulates the pixel signals supplied from the horizontal transfer control section 54, performs, when one frame worth of image is formed, a general development process such as demosaicing process and synthesis, and then outputs the image.

### <Configuration Example of the Pixel Circuit>

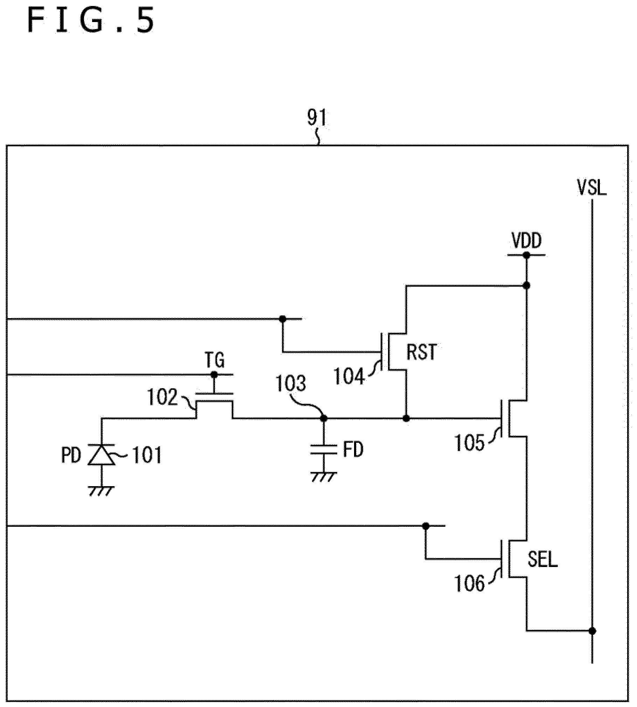

A description will be given next of a configuration of a pixel circuit of the pixel 91 of the pixel array 51 with reference to Fig. 5. The pixel circuit included in the pixel 91 has, for example, a photodiode (PD) 101 as a photoelectric conversion element. Also, the pixel circuit included in the pixel 91 has, for example, a transfer transistor (TG: transfer gate) 102, a reset transistor (RST) 104, an amplifying transistor 105, and a select transistor (SEL) 106 in addition to the photodiode 101 and a floating diffusion (FD) 103 for accumulating charge.

This pixel circuit included in the pixel 91 is supplied, as appropriate, with a transfer signal TG, a reset signal RST, and a select signal SEL, drive signals (control signals) for driving the pixel circuit from the vertical transfer control section 52. That is, the transfer signal TG, the reset signal RST, and the select signal SEL are applied to a gate electrode of the transfer transistor 101, a gate electrode of the reset transistor 104, and a gate electrode of the select transistor 106, respectively.

The photodiode 101 has its anode electrode connected to a low potential side power supply (e.g., ground), converting received light (incident light) into photocharge (photoelectrons here) proportional to the charge amount of received light and accumulating the photocharge. The photodiode 101 has its cathode electrode electrically connected to a gate electrode of the amplifying transistor 105. A node electrically connected, through transfer transistor 102, to the gate electrode of the amplifying transistor 105 is the floating diffusion (FD) section 103.

The transfer transistor 102 is connected between the cathode electrode of the photodiode 101 and the FD section 103. The gate electrode of the transfer transistor 102 is supplied with the transfer signal TG that is active at high level (e.g., VDD level) (hereinafter denoted as "High active") from the vertical transfer control section 52. The transfer transistor 102 goes into conduction in response to this transfer signal TG, transferring photocharge converted from light by the photodiode 101 to the FD section 103.

The reset transistor 104 has its drain electrode connected to a pixel power supply VDD and its source electrode connected to the FD section 103, respectively. The gate electrode of the reset transistor 104 is supplied with the high active reset signal RST from the vertical transfer control section 52. The reset transistor 104 goes into conduction in response to this reset signal RST, throwing away the charge of the FD section 103 to the pixel power supply VDD and resetting the FD section 103.

The amplifying transistor 105 has its gate electrode connected to the FD section 103 and its drain electrode connected to the pixel power supply VDD, respectively. Then, the amplifying transistor 105 outputs the potential of the FD section 103 following the reset by the reset transistor 104 as a reset signal (reset level) Vreset. The amplifying transistor 105 further outputs the potential of the FD section 103 following the transfer of signal charge by the transfer transistor 102 as an optically accumulated signal (signal level) Vsig.

The select transistor 106 has, for example, its drain electrode connected to the source electrode of the amplifying transistor 105 and its source electrode connected to a vertical signal line. The gate electrode of the select transistor 106 is supplied with the high active select signal SEL from the vertical transfer control section 52. The select transistor 106 goes into conduction in response to this select signal SEL, placing the pixel 91 into a selected state and causing the signal, output from the amplifying transistor 105, to be read out onto a vertical signal line VSL.

As is obvious from the above description, the potential of the FD section 103 is sequentially read out from the pixel circuit included in the pixel 91 onto the vertical signal line VSL, starting with the post-reset potential as the reset level Vreset followed by the potential of the FD section 103 after the transfer of signal charge as the signal level Vsig. Incidentally, the signal level Vsig includes the component of the reset level Vreset.

It should be noted that although, in the circuit configuration described here, the select transistor 106 is connected between the source electrode of the amplifying transistor 105 and the vertical signal line VSL, a circuit configuration can be used in which the select transistor 106 is connected between the pixel power supply VDD and the drain electrode of the amplifying transistor 105.

Also, the pixel circuit included in the pixel 91 is not limited to a pixel configuration having the above four transistors. For example, the pixel circuit may have a pixel configuration including three transistors, with the amplifying transistor 105 doubling the function of the select transistor 106 or a pixel configuration in which the transistors beyond the FD section 103 are shared among a plurality of photoelectric conversion elements (pixels), and it does not matter what kind of pixel circuit configuration is used.

### <Configuration Example of the Readout Pulse Generation Section>

A description will be given next of a configuration example of the readout pulse generation section 71 with reference to the block diagram illustrated in Fig. 6.

The readout pulse generation section 71 includes a readout counter 121 and a comparator 122.

The readout counter 121 increments its counter by 1 in synchronism with a horizontal synchronizing clock (horizontal synchronizing signal) supplied from the H synchronizing clock generation section 53 and supplies the counter value to a non-inverting input terminal of the comparator 122. Also, the readout counter 121 is supplied with the output of the comparator 122 as a reset signal and is reset when the reset signal is a Hi signal.

The comparator 122 compares the value (Rmax) supplied, as a mode switching signal, to its inverting input terminal from the signal processing section 22 and set as the maximum value of the counter with the value input to the non-inverting input terminal and supplied from the readout counter 121. In the case where the value supplied from the non-inverting input terminal is greater, the comparator 122 outputs a Hi signal, otherwise the comparator 122 outputs a low signal.

The readout pulse generation section 71 operates as illustrated in Fig. 7 in response to a mode switching signal supplied from the signal processing section 22.

Here, Fig. 7 illustrates, from top, a waveform of the horizontal synchronizing clock (H SYNC), a waveform of Rmax (maximum count value) representing the (maximum value-1) of the readout counter 121, a mode switching signal, a waveform of a counter R of the readout counter 121, and a waveform of the readout pulse.

That is, when, at the first clock of the horizontal synchronizing clock, as a mode switching signal, Rmax=2 representing the maximum value-1 of the readout counter 121 is, for example, supplied to specify 1/3-row readout mode, the readout counter 121 outputs 0 of the readout counter R to the non-inverting input terminal of the comparator 122. At this time, Rmax=2 is input to the inverting input terminal of the comparator 122, and 0 is input to the non-inverting terminal thereof. As a result, the comparator 122 outputs a low signal as a readout pulse.

Next, at the second clock of the horizontal synchronizing clock, Rmax, the mode switching signal, remains at 2, and the readout counter 121 increments the readout counter value of 0 by 1 and outputs 1 to the non-inverting input terminal of the comparator 122. At this time, Rmax=2 is input to the non-inverting input terminal of the comparator 122, and 1 is input to the inverting input terminal thereof. As a result, the comparator 122 outputs a low signal as a readout pulse.

Also, at the third clock of the horizontal synchronizing clock, Rmax, the mode switching signal, remains at 2, and the readout counter 121 increments the readout counter value of 1 by 1 and outputs 2 to the non-inverting input terminal of the comparator 122. At this time, Rmax=2 is input to the non-inverting input terminal of the comparator 122, and 2 is input to the inverting input terminal thereof. As a result, the comparator 122 outputs a Hi signal as a readout pulse. This allows the Hi signal to be supplied to the readout counter 121, resetting the readout counter value to 0.

That is, a readout pulse occurs at the third clock of the horizontal synchronizing clock, and when a readout pulse occurs, the vertical transfer control section 52 is caused to perform pixel readout operation.

A similar operation is repeated from here onwards.

That is, a readout pulse is output such that readout operation is performed only once every three horizontal synchronizing clocks. That is, the operation in 1/3-row readout mode is realized by the generation of this readout pulse.

It should be noted that although, not illustrated, the reset pulse generation section 72 always outputs a Hi signal reset pulse for each horizontal synchronizing clock. The vertical transfer control section 52 performs pixel reset operation during generation of a reset pulse. That is, the vertical transfer control section 52 causes the pixels in all the rows to be reset in synchronism with a horizontal synchronizing clock.

### <Operation Control Process>

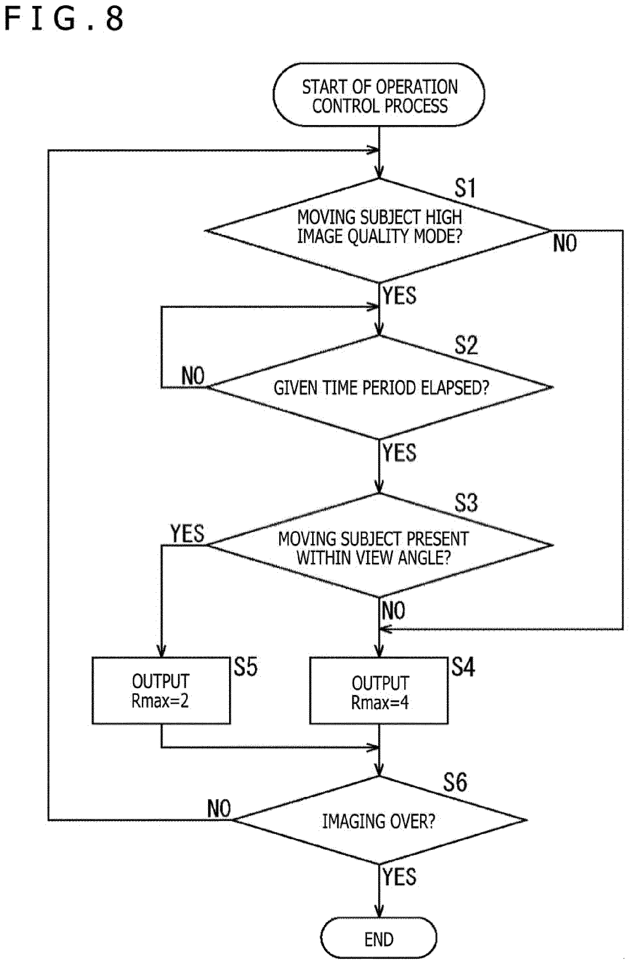

A description will be given next of the operation control process performed by the signal processing section 22 with reference to the flowchart illustrated in Fig. 8.

In step S1, the state determination section 32 determines whether or not moving subject high image quality mode has been set. In the case where the moving subject high image quality mode has been set as a result of manipulation of the operation section 24, for example, the state determination section 32 assumes that the moving subject high image quality mode has been set, and the process proceeds to step S2.

In step S2, the state determination section 32 determines whether or not a given time period has elapsed and repeats a similar process until the given time period elapses. Then, in the case where it is assumed in step S2 that the given time period has elapsed, the process proceeds to step S3.

In step S3, the state determination section 32 determines whether or not a moving subject is present within a view angle. Going into more detail, the state determination section 32 compares a plurality of most recent frame images stored in the frame memory 31 and determines whether or not a moving subject is present on the basis of whether or not a sum of absolute difference between the pixels is equal to or greater than a given value and depending on whether or not a large change occurs within the view angle. Alternatively, the state determination section 32 has a motion detection function and determines whether or not a moving subject is present on the basis of whether motion has been detected.

In the case where no moving subject has been detected in step S3, the process proceeds to step S4.

In step S4, because no moving subject has been detected or moving subject high image quality mode has not set, the state determination section 32 instructs the imaging element control section 33 to capture an image at low quality, i.e., with a number of pixels skipped. On the basis of this instruction, the imaging element control section 33 supplies, to the image sensor 21, information indicating Rmax=4, the maximum value of the readout counter 121, as the mode switching signal Rmax.

On the other hand, in the case where a moving subject has been detected in step S3, the process proceeds to step S5.

In step S5, because a moving subject has been detected, the state determination section 32 instructs the imaging element control section 33 to capture an image at high quality, i.e., with a small number of pixels skipped. On the basis of this instruction, the imaging element control section 33 supplies, to the image sensor 21, information indicating that Rmax=2, the maximum value of the readout counter 121, as a mode switching signal.

Also, in the case where moving subject high image quality mode has not been set in step S1, the process proceeds to step S4.

In step S6, the state determination section 32 determines whether or not an instruction has been issued to terminate imaging, for example, by manipulation of the operation section 24. In the case where no instruction has been issued to terminate imaging, the process returns to step S1. That is, the processes from step S1 to step S6 are repeated until an instruction is issued to terminate imaging. Then, in the case where an instruction is issued to terminate imaging in step S6, the process is terminated.

That is, in the case where no moving subject has been detected, or in the case where moving subject high image quality mode has not been set, Rmax is set to 4 as a mode switching signal, and in the case where moving subject high image quality mode has been set, and in the case where a moving subject has been detected, Rmax is set to 2.

Therefore, in the case where the moving subject high image quality mode is not selected, or in the case where moving subject mode has been set, and in the case where no moving subject has been detected, 1/5-row readout mode is selected. In the case where moving subject mode has been set, and in the case where a moving subject has been detected, 1/3-row readout mode is selected.

As a result, in the case where the moving subject high image quality mode has been set and in the case where a moving subject has been detected, pixel readout can be performed with less pixels skipped, and therefore, images can be captured at higher quality than in the case where moving subject high image quality mode has not been set or in the case where moving subject high image quality mode has been set and in the case where no moving subject has been detected.

This makes it possible to realize power saving by capturing images in non-high image quality mode, i.e., in low image quality mode with a number of pixels skipped, in the case where no moving subject has been detected in moving subject high image quality mode, and a data volume of captured images can be reduced, thereby reducing a storage capacity for accumulating images. Also, in the case where moving subject high image quality mode has been set and in the case where a moving subject has been detected, images can be captured in high image quality mode with a small number of pixels skipped.

### <Readout/Reset Process Performed by the Image Sensor>

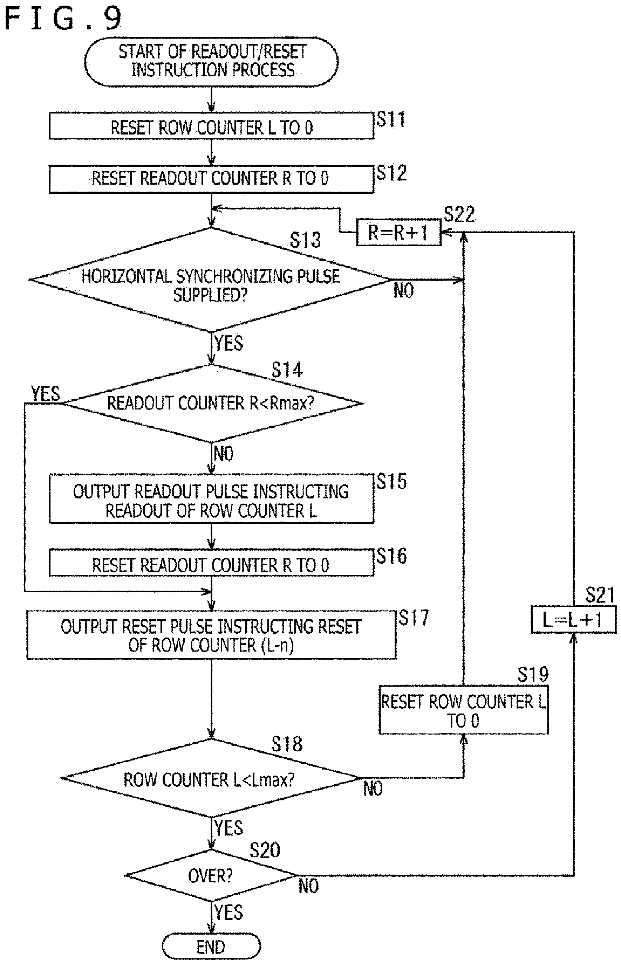

A description will be given next of a readout/reset control process performed by the image sensor 21 with reference to the flowchart illustrated in Fig. 9

In step S11, the readout pulse generation section 71 resets a row counter L which is not depicted to 0.

In step S12, the readout pulse generation section 71 resets the readout counter R of the readout counter 121 to 0.

In step S13, the readout pulse generation section 71 determines whether or not the horizontal synchronizing clock has counted up. That is, the readout pulse generation section 71 determines whether or not one horizontal synchronizing clock worth of square wave has been generated and supplied from the H synchronizing clock generation section 53, and in the case where a square wave has been supplied, the process proceeds to step S14.

In step S14, the readout pulse generation section 71 determines whether or not the readout counter R is smaller than the maximum value Rmax. The term "maximum value Rmax" here refers to the mode switching signal Rmax output as a result of the operation control process described above.

In step S14, for example, in the case where the readout counter R is smaller than the mode switching signal Rmax, the processes in steps S15 and S16 are skipped, and the process proceeds to step S17.

In step S17, the reset pulse generation section 72 generates a reset pulse instructing reset of the pixels in the (L-n)th row obtained by subtracting n rows from the Lth row indicated by the row counter L. Here, the factor n represents, in the same horizontal synchronizing clock, the difference between the row subjected to pixel reset and the row subjected to pixel readout. That is, the timing at which next pixel reset is performed after pixel readout is determined by exposure time and readout interval and is equal to an integer multiple of the horizontal synchronizing clock, and the number of horizontal synchronizing clocks and the number of rows, the difference, are the same. Therefore, this factor n is used to make an adjustment.

For example, in the case of 1/3-row readout mode, the pixel reset (shut) of the third row takes place at the horizontal synchronizing clock immediately after the 14th clock of the horizontal synchronizing clock when pixel readout (Read) was performed as depicted by the 15th clock of the horizontal synchronizing clock illustrated in Fig. 2, and the difference n between the two is one horizontal synchronizing clock. As a result, there is a shift of one row. It should be noted that in describing the flowchart illustrated in Fig. 9, we assume that n=1.

In step S18, the readout pulse generation section 71 determines whether or not the row counter L is smaller than a maximum row count Lmax, the number of vertical rows, and in the case where the row counter L is smaller, the process proceeds to step S20.

In step S20, the readout pulse generation section 71 determines whether or not an instruction has been issued to terminate the operation, and in the case where no instruction has been issued to terminate the operation, the process proceeds to step S21.

In step S21, the readout pulse generation section 71 increments the row counter L by 1, and the process proceeds to step S22.

In step S22, the readout pulse generation section 71 increments the readout counter R by 1, and the process returns to step S13.

Also, in step S18, when the row counter L is not smaller than the maximum value Lmax, that is, when the row counter L is equal to the maximum value Lmax, the process proceeds to step S19.

In step S19, the readout pulse generation section 71 resets the row counter L to 0, and the process returns to step S22.

That is, the processes from step S13 to step S22 are repeated until the readout counter R reaches the maximum value Rmax. During this time period, as the horizontal synchronizing clock elapses by one unit, the process advances by one row, and a reset pulse is generated in each row. At this horizontal synchronizing timing when a reset pulse is generated, the vertical transfer control section 52 generates a control pulse required for pixel reset, causing pixel reset to be performed in the row counter L. Also, a reset pulse is generated in each of all the rows. Therefore, as the horizontal synchronizing clock progresses by one unit, the process advances by one row, causing pixel reset to be always performed in each row.

Then, in step S14, in the case where readout counter R<Rmax is not true, that is, in the case where the readout counter R reaches the maximum value Rmax, the process proceeds to step S15.

In step S15, the readout pulse generation section 71 generates a readout pulse instructing pixel readout to be performed in the row counter L.

In step S16, the readout pulse generation section 71 resets the readout counter R to 0.

That is, at a horizontal synchronizing clock timing when a pixel readout pulse is generated by the readout pulse generation section 71, the vertical transfer control section 52 generates a control pulse required for pixel readout, causing pixel readout to be performed in the row counter L. Also, a readout pulse is generated at a row interval defined by the mode switching signal Rmax. For this reason, for example, in the case where the mode switching signal Rmax is 2, the mode in which readout is performed once every three horizontal synchronizing clocks, i.e., 1/3-row readout mode, is selected as illustrated in Fig. 7, causing a readout pulse to be generated once every three rows and pixel readout to be performed in one row every three rows.

Thanks to the above processes, one horizontal synchronizing clock worth of reset pulse is generated in each row even in the rows that have been skipped up to that point in time, causing pixel reset to be performed. As a result, as far as pixel readout is concerned, a pixel signal having the same exposure time can be read out in any row even if skipped rows are set.

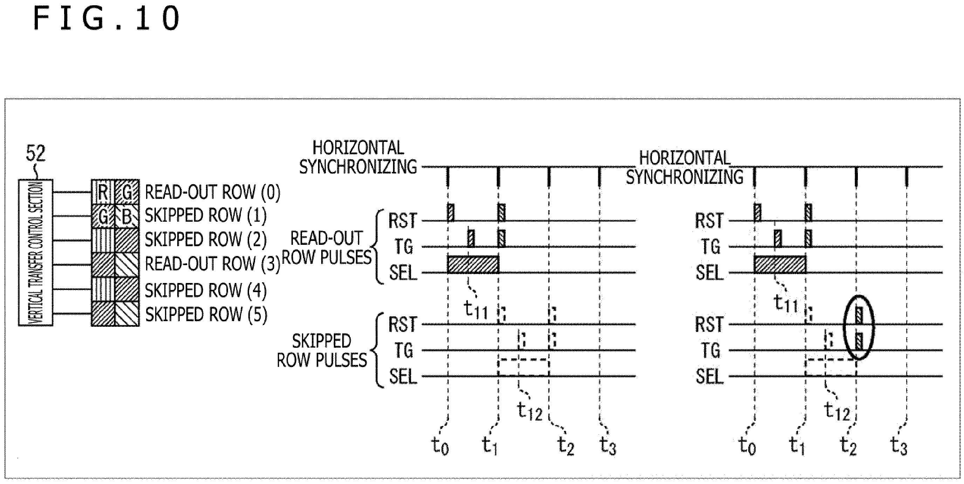

That is, in the case where six rows of Bayer pattern including two pixels by two pixels are arranged, with the rows designated, from top, as the zeroth, first, second rows and so on as illustrated at left in Fig. 10, the zeroth and third rows are set as read-out rows and other rows are set as skipped rows in 1/3-row readout mode.

At this time, in the case where a conventional readout control method is used, pixel readout is performed in a read-out row from time t0 to time t1, the first clock of the horizontal synchronizing clock as illustrated at top center in Fig. 10. That is, from time t0 to time t1, a select pulse SET is a Hi signal. At the same time, a reset pulse RST is generated at time t0, turning ON the reset transistor 104 and causing the potential of the FD section 103 after the reset to be read out as the reset level Vreset. Thereafter, at time t11, the transfer signal TG is generated, turning ON the transfer transistor 102 and causing the potential of the FD section 103 after the transfer of signal charge to be successively read out onto the vertical signal line VSL as the signal level Vsig. Thereafter, AD (Analog/Digital) conversion of the signal level Vsig and the reset level Vreset are is performed, after which CDS (Correlated Double Sampling) is performed to find a difference, and the difference is output as a pixel signal.

Further, at time t1 immediately thereafter when the second clock of the horizontal synchronizing clock is generated, the reset pulse RST is generated, turning ON the reset transistor 104, and the transfer signal TG is generated, turning ON the transfer transistor 102 and causing pixel reset to be performed.

As for the skipped rows, control signals for controlling the pixel circuit of the pixel 91 are not generated as illustrated at bottom center in Fig. 10.

In contrast, in the imaging apparatus of the present disclosure, the readout pulse generation section 71 generates a readout pulse as described above for the read-out rows. As a result, the vertical transfer control section 52 generates, as illustrated at top right in Fig. 10, control signals similar to those illustrated at top center in Fig. 10.

At this time, a readout pulse is not generated by the readout pulse generation section 71 for the skipped rows, and only a reset pulse is generated by the reset pulse generation section 72. For this reason, a reset pulse is generated by the reset pulse generation section 72 at the second clock of the horizontal synchronizing clock as illustrated at bottom right in Fig. 10. As a result, at time t2, the reset pulse RST is generated as illustrated by a circle, turning ON the reset transistor 104, and the transfer signal TG is generated, turning ON the transfer transistor 102 and causing pixel reset to be performed.

It should be noted, however, that, in the imaging apparatus of the present disclosure, pixel readout is not performed in the skipped rows, as well. As a result, AD conversion does not take place, making it possible to achieve power saving.

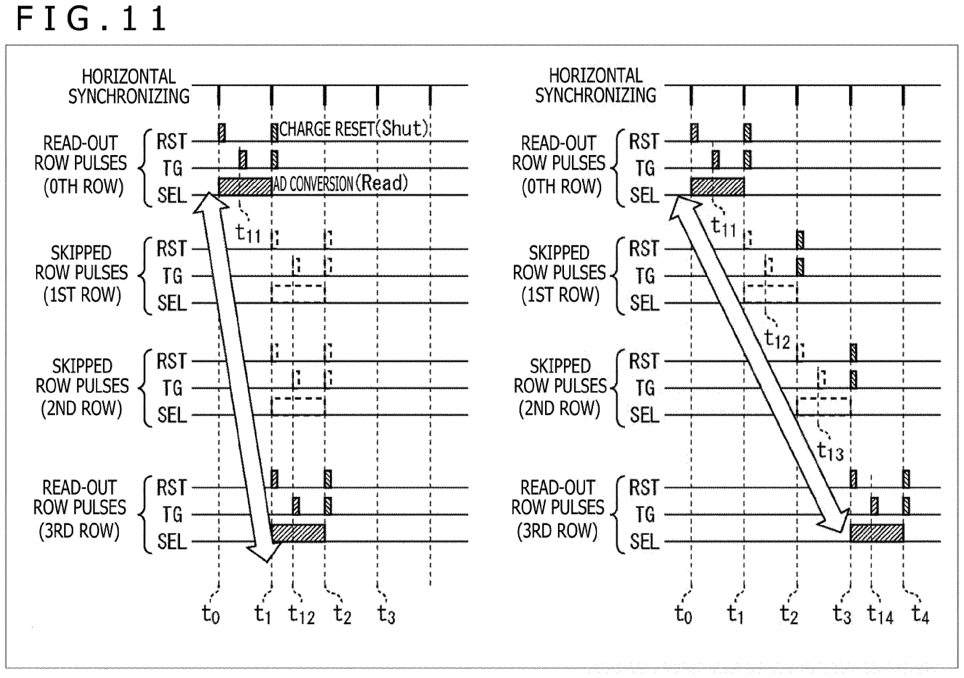

Further, for example, in the case of 1/3-row readout mode, when pixel readout is performed in the zeroth row, the read-out row from time t0 to time t1, as illustrated at left in Fig. 11, pixel reset is conventionally performed in the zeroth row from time t1 to time t2 immediately thereafter, and at the same time, pixel readout is performed in the third row, the next read-out row.

That is, in the conventional case, when the skipping interval is set to m rows, the timing of the row subjected to pixel readout from the readout start time in the frame subjected to pixel readout is equal to the row subjected to pixel readout (row number)/mth the time corresponding to the pulse width of the horizontal synchronizing clock.

In contrast, in the imaging apparatus of the present disclosure, when pixel readout is performed in the zeroth row, the read-out row from time t0 to time t1, as illustrated at right in Fig. 11, only pixel reset is performed in the zeroth row from time t1 to time t2 immediately thereafter.

Also, thereafter, pixel readout is not performed in the first row, a skipped row, and only pixel reset is performed at time t2, the next timing thereof. Further, pixel readout is not performed in the second row, a skipped row, as well, and only pixel reset is performed at time t3, the next timing thereof.

Then, in the third row, the next read-out row, when pixel readout is performed from time t3 to time t4, pixel reset is performed in the third row at time t4 immediately thereafter.

It should be noted that, in Fig. 11, the waveforms depicted by dotted lines are those when pixel readout is performed in the case of all-pixel readout mode.

As illustrated at right in Fig. 11, in the imaging apparatus of the present disclosure, the interval between rows subjected to pixel readout and the time interval between pixel readouts are set irrespective of whether skipping is performed. That is, in the case of 1/3-row readout mode, when the zeroth row is read out, the next row to be read out is the third row. However, the time interval between rows subjected to pixel readout is three times the horizontal synchronizing clock. Also, in the case of 1/5-row readout mode, when the zeroth row is read out, the next row to be read out is the sixth row. Therefore, the time interval between pixel readouts is five times the horizontal synchronizing clock. That is, in the case of 1/m-row readout mode, the time interval between rows subjected to pixel readout is m times the horizontal synchronizing clock.

That is, when the skipping interval is set to m rows, the time interval between rows subjected to pixel readout is m times the horizontal synchronizing clock, and the timing at which the row to be read out is actually read out becomes constant, lasting from the readout start time in the frame to be read out till the number of rows times the horizontal synchronizing clock, irrespective of the number of skipped rows, i.e., irrespective of whether skipping is performed.

For this reason, even if, as a result of an operation performed to switch, for example, from 1/3-row readout mode over to 1/5-row readout mode or to all-pixel readout mode, a row different from the row selected up to that moment is set as a read-out row, it is possible to perform readout as a proper pixel signal. This eliminates the likelihood for a frame to be wasted immediately after mode switching due to the occurrence of an invalid frame, thereby making it possible to realize reproduction of videos without causing any sense of discomfort. Moreover, in the case where skipped rows are set, pixel readout is not performed. As a result, AD conversion does not take place, making it possible to reduce power consumption.

Also, in the imaging apparatus of the present disclosure, each pixel produces a pixel signal having the same exposure time as other pixel signals, and pixel reset and pixel readout are performed at constant time intervals in all the rows, irrespective of whether skipping is performed and irrespective of the skipping interval. As for remedy against flickering, it is sufficient if the same process be applied, thereby making it possible to reduce workload.

### <Factor n>

A description has been given above of an example in which pixel reset is performed immediately after the end of pixel readout with the factor n set to 1 in the process in step S17 of the flowchart illustrated in Fig. 9. As described above, the interval between pixel readout and pixel reset set by this factor n can be set at will as a multiple of the horizontal synchronizing clock.

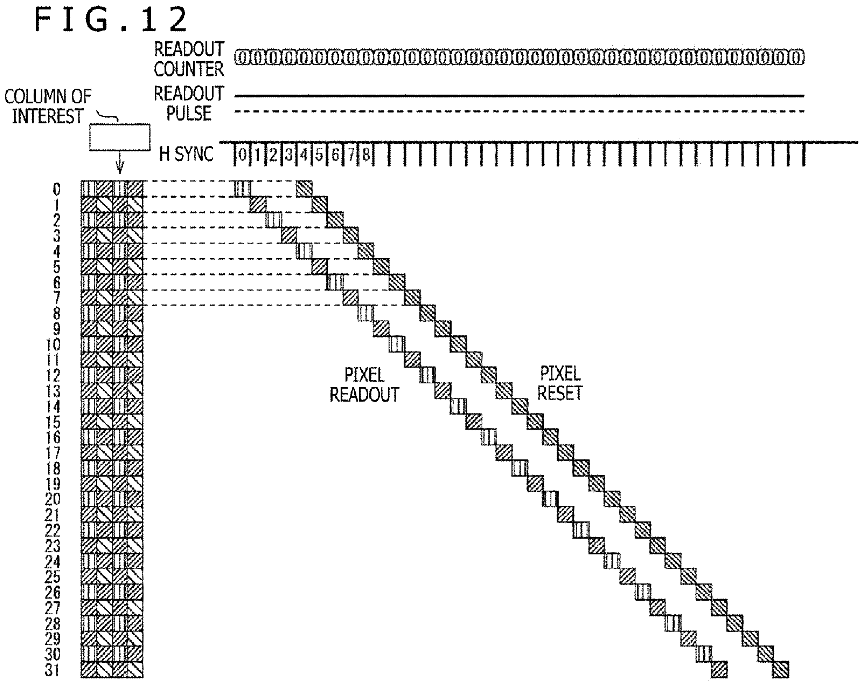

That is, for example, in the case where two columns of Bayer pattern pixels, i.e., a total of four columns of pixel patterns, are arranged from top to bottom, with the second column from right being the column of interest illustrated at left in Fig. 12, the pixel readout timing falls on the zeroth clock timing of the horizontal synchronizing clock. When pixel reset is set four periods later at the timing of the fifth clock of the horizontal synchronizing clock, the factor n is 4. It should be noted, however, that the factor n is set to a row count. Therefore, until the target row number reaches the fifth row, we assume that the process is ignored because 0 or a smaller number is obtained.

### (Case of All-Pixel Readout Mode)

In the case of all-pixel readout mode, the readout counter R is always 0, and a readout pulse is continuously generated as illustrated in Fig. 12.

For example, in the process of the fifth row where the row counter L is 5, pixel readout is performed at the timing of the fifth clock of the horizontal synchronizing clock (H SYNC), and pixel reset is performed in the first row obtained by subtracting the factor n=4.

Then, as the horizontal synchronizing clock progresses, this operation is repeated, with the row number subjected to pixel readout and the row number subjected to pixel reset sequentially incremented by 1.

### (1/3-Row Readout Mode)

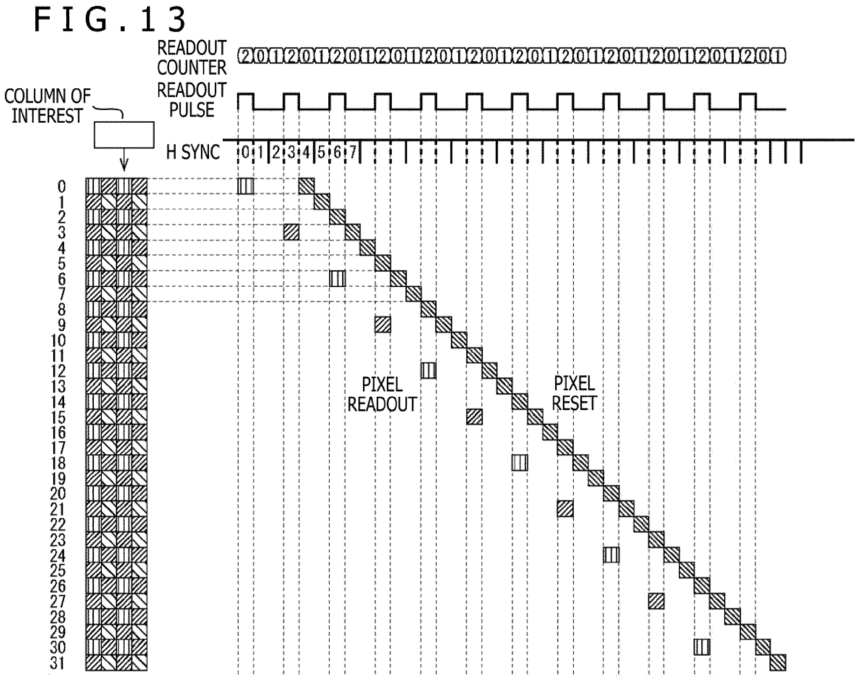

Also, for example, in the case of 1/3-row readout mode, the readout counter R takes a value of 0, 1, or 2 as illustrated in Fig. 13, and of these, when the readout counter R is 2, a readout pulse is generated.

Therefore, in this case, pixel readout is performed in the zeroth, third, sixth rows and so on at the zeroth, third, sixth clocks and so on of the horizontal synchronizing clock in Fig. 13. For example, in the process of the sixth row where the row counter L is 6, pixel readout is performed at the timing of the sixth clock of the horizontal synchronizing clock (H SYNC), and pixel reset is performed in the second row obtained by subtracting the factor n=4.

Then, as the horizontal synchronizing clock progresses, this operation is repeated in which pixel readout is performed once every three horizontal synchronizing clocks, that is, one row number every three row numbers is subjected to pixel readout, and pixel reset is performed in every row.

### (1/5-Row Readout Mode)

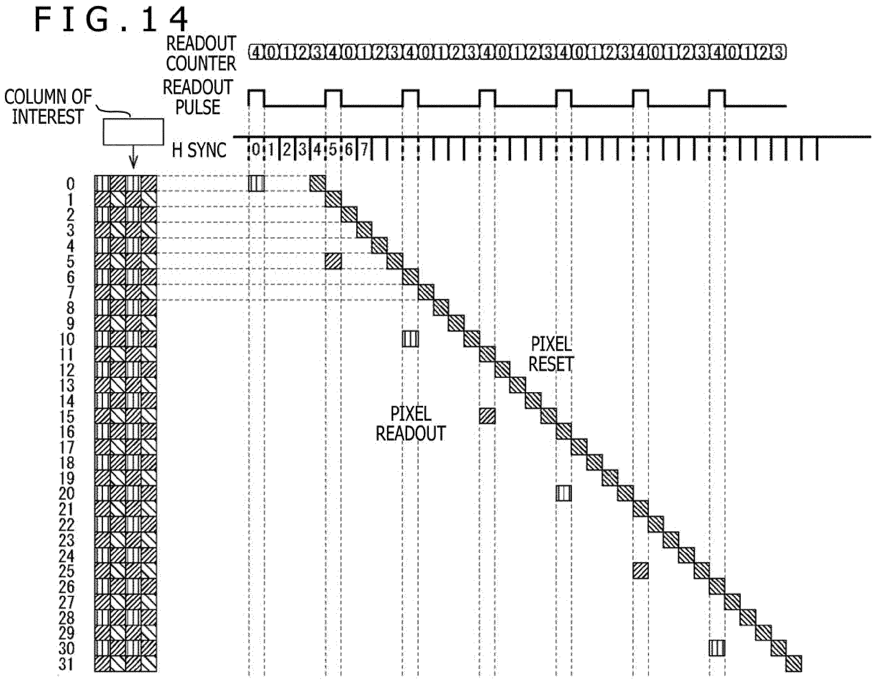

Further, for example, in the case of 1/5-row readout mode, the readout counter R takes a value of 0, 1, 2, 3, or 4 as illustrated in Fig. 14, and of these, when the readout counter R is 4, a readout pulse is generated.

Therefore, in this case, pixel readout is performed in the zeroth, fifth, tenth rows and so on at the zeroth, fifth, tenth clocks and so on of the horizontal synchronizing clock in Fig. 14. For example, in the process of the fifth row where the row counter L is 5, pixel readout is performed at the timing of the fifth clock of the horizontal synchronizing clock (H SYNC), and pixel reset is performed in the first row obtained by subtracting the factor n=4.

Then, as the horizontal synchronizing clock progresses, this operation is repeated in which pixel readout is performed once every five horizontal synchronizing clocks, that is, one row number every five row numbers is subjected to pixel readout, and pixel reset is performed in every row.

Thanks to the above processes, even if the interval between pixel readout and pixel reset is adjusted with the factor n, the timing at which the row to be read out is actually read out becomes constant, lasting from the readout start time in the frame to be read out till the number of rows times the horizontal synchronizing clock, irrespective of the number of skipped rows, i.e., irrespective of whether skipping is performed.

Therefore, even when readout modes are switched, pixel readout can be performed with consistent exposure time in all rows, preventing the occurrence of a frame subjected to invalid readout and thereby suppressing the occurrence of an invalid frame.

It should be noted that a description has been given above of an example in which all-pixel readout mode, 1/3-row readout mode, and 1/5-row readout mode are switched from one to another, a readout mode may be set at other skipping interval (skipping rate). At this time, for example, in the case where the use of only two readout modes, i.e., 1/3-row readout mode and 1/6-row readout mode, is specified in advance, only the rows numbered multiples of 3 are substantially used.

For this reason, in such a case, the zeroth row undergoes pixel reset after pixel readout, and the third row undergoes pixel readout. Then, the third row undergoes pixel reset after the completion of readout in the third row, and the sixth row undergoes pixel reset. Thus, pixel readout and pixel reset are repeated in the rows numbered multiples of 3, and pixel readout and pixel reset are halted in other rows.

As a result, it is possible to realize faster imaging than in all-pixel readout mode. In addition, seamless readout can be achieved even when 1/3-row readout mode and 1/6-row readout mode are switched from one to the other, thereby suppressing the occurrence of an invalid frame even during switching and realizing power saving.

### <<3. First Modification Example>>

A description has been given above of an example in which 1/3-row readout mode or 1/5-row readout mode is selected depending on the presence or absence of a moving subject in moving subject high image quality mode that selects high image quality mode only in the case where a moving subject has been imaged in the operation control process. However, for example, 1/5-row readout mode may be selected when the detected drive battery level is lower than a given level, and, otherwise, 1/3-row readout mode may be selected, and the readout mode may be switched to power saving mode in accordance with remaining battery charge.

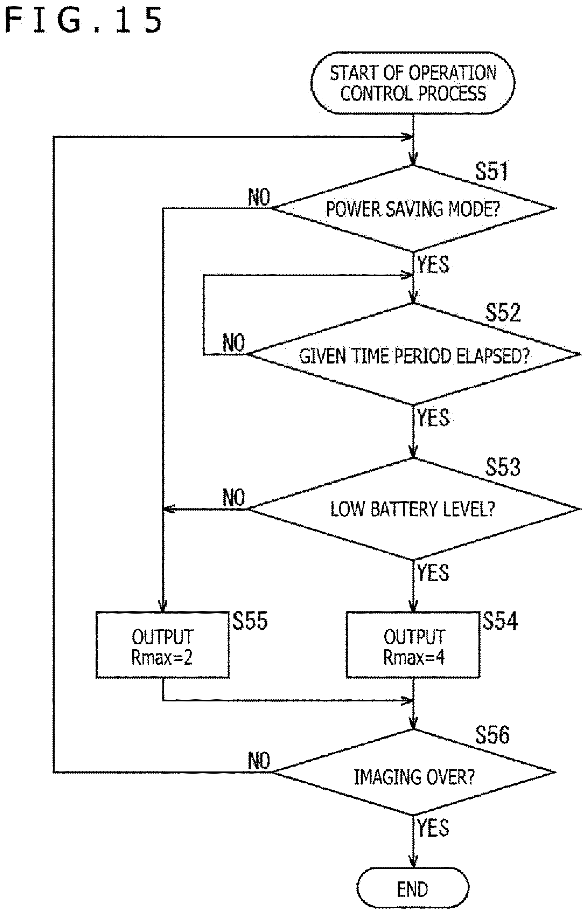

For this reason, a description will be given below of the operation control process in power saving mode with reference to the flowchart illustrated in Fig. 15.

In step S51, the state determination section 32 determines whether or not power saving mode is selected. In the case where power saving mode has been set by manipulation of the operation section 24, the state determination section 32 assumes that power saving mode is selected, and the process proceeds to step S52.

In step S52, the state determination section 32 determines whether or not a given time period has elapsed and repeats a similar process until the given time period elapses. Then, in the case where it is assumed in step S52 that the given time period has elapsed, the process proceeds to step S53.

In step S53, the state determination section 32 detects the battery level of the imaging apparatus 11 that is not depicted and determines whether or not the detected battery level is lower than a given level.

In the case where the battery level is not lower than the given level in step S53, the process proceeds to step S55.

In step S55, because the battery level is not lower than the given level, that is, the battery level is sufficient, the state determination section 32 instructs the imaging element control section 33 to capture an image at high quality, i.e., with a small number of pixels skipped. On the basis of this instruction, the imaging element control section 33 supplies, to the image sensor 21, information indicating Rmax=2, the maximum value of the readout counter 121, as the mode switching signal Rmax.

On the other hand, in the case where the battery level is lower than the given level in step S53, the process proceeds to step S54.

In step S54, because the battery level is lower than the given level, the state determination section 32 instructs the imaging element control section 33 to capture an image at low quality, i.e., with a number of pixels skipped. On the basis of this instruction, the imaging element control section 33 supplies, to the image sensor 21, information indicating Rmax=4, the maximum value of the readout counter 121, as the mode switching signal.

Also, in the case where power saving mode is not selected in step S51, the process proceeds to step S55.

In step S56, the state determination section 32 determines whether or not an instruction has been issued to terminate imaging, for example, by manipulation of the operation section 24. In the case where no instruction has been issued to terminate imaging, the process returns to step S51. That is, the processes from step S51 to step S56 are repeated until an instruction is issued to terminate imaging. Then, in the case where an instruction is issued to terminate imaging in step S56, the process is terminated.

That is, in the case where the battery level is not lower than the given level, or in the case where power saving mode is not selected, Rmax is set to 4 as mode switching signal information, and in the case where power saving mode is selected with the battery level lower than the given level, Rmax is set to 2.

For this reason, in the case where power saving mode is selected with the battery level lower than the given level, 1/5-row readout mode is selected, and in the case where power saving mode is not selected, or in the case where power saving mode is selected with the battery level not lower than the given level, 1/3-row readout mode is selected.

As a result, readout is performed with more pixels skipped in the case where power saving mode is selected with the battery level lower than the given level than in the case where power saving mode is not selected or in the case where power saving mode is selected with the battery level not lower than the given level, allowing for more power saving and extending possible imaging time.

<<4. Second Modification Example>>

A description has been given above of a configuration example in which the image sensor 21 and the signal processing section 22 are separate. However, for example, the image sensor 21 and the signal processing section 22 may have a configuration in which the two are combined in one piece.

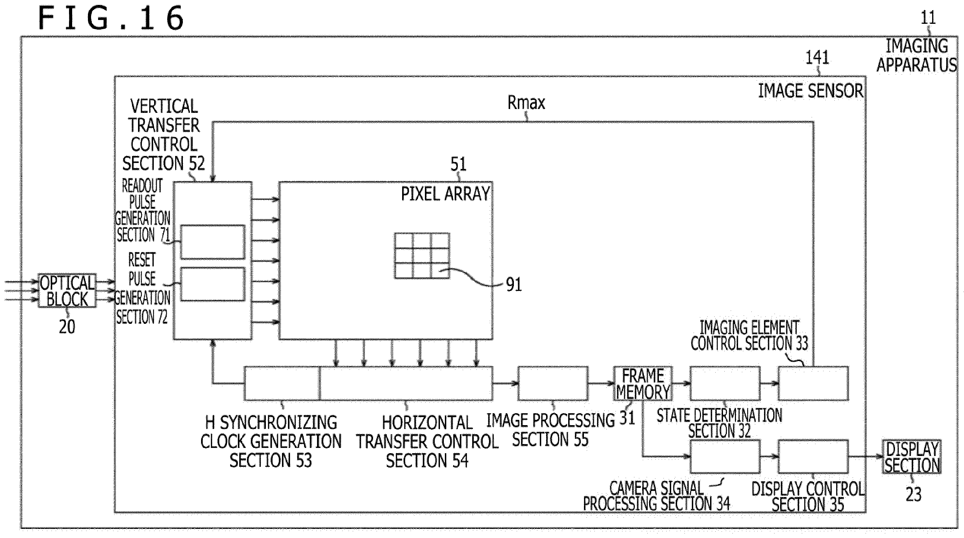

That is, Fig. 16 illustrates a configuration example of the imaging apparatus 11 in which components of the image sensor 21 and the signal processing section 22 are provided on the same chip. In the imaging apparatus 11 illustrated in Fig. 16, the components having the same functions as those of the imaging apparatus 11 illustrated in Fig. 3 are denoted by the same names and the same reference signs, and the description thereof will be omitted as appropriate.

That is, the imaging apparatus 11 illustrated in Fig. 16 differs from the imaging apparatus 11 illustrated in Fig. 3 in that the imaging apparatus 11 illustrated in Fig. 16 includes an image sensor 141 which is a combination of the components of the signal processing section 22 and the image sensor 21 in one piece.

The image sensor 141 is configured, for example, such that the pixel array 51 to the image processing section 55, the components of the image sensor 21, and the frame memory 31 to the display control section 35, the components of the signal processing section 22 illustrated in Fig. 1, are combined into one piece.

Going into more detail, the image sensor 141 has, for example, the pixel array 51 to the image processing section 55, the components of the image sensor 21, and the frame memory 31 to the display control section 35, the components of the signal processing section 22 in Fig. 1 provided on the same chip.

Alternatively, the image sensor 141 has a configuration in which an upper chip having the pixel array 51, a component of the image sensor 21, and a lower chip having the frame memory 31 to the display control section 35, the components of the signal processing section 22 illustrated in Fig. 1 and the vertical transfer control section 52 to the image processing section 55 are stacked one on top of the other.

Such a configuration makes it possible to suppress the occurrence of an invalid frame even in the event of a change of the readout mode, allowing for downsizing and weight reduction of the configuration of the imaging apparatus 11.

As described above, according to the imaging apparatus of the present disclosure, when the readout mode is switched, a wasted frame (invalid frame) does not occur immediately after the switching, making it possible to capture an image that does not cause a sense of discomfort even during seamless switching between readout modes.

Also, in the case where preliminary dimming or fast imaging such as high frame rate imaging is required, for example, a mode illustrated in Fig. 1 may be selected in which sequential readout in skipped rows followed by pixel reset are repeated as conventionally done.

Further, although a description has been given of an example in which the readout mode is switched in accordance with the presence or absence of a moving subject or the battery level, the imaging apparatus of the present disclosure may be used, for example, as a monitoring camera. That is, in the case where the imaging apparatus of the present disclosure is used as a monitoring camera, all-pixel mode may be selected only when an intruder is detected in a monitoring area, and, otherwise, 1/3-row readout mode or 1/5-row readout mode may be selected.

Further, the imaging apparatus of the present disclosure may be used as a vehicle-mounted camera. That is, in the case where the imaging apparatus of the present disclosure is used, for example, as a vehicle-mounted camera, the imaging apparatus may be operated together with an impact detection apparatus for detecting impact or other apparatus so that when it is determined that an accident or other event has occurred because of detection of a strong impact, all-pixel readout mode is selected, and that, otherwise, 1/3-row readout mode or 1/5-row readout mode is selected. Also, the imaging apparatus may be caused to function as the above monitoring camera unless the vehicle is cruising.

Further, in the case where the imaging apparatus has, for example, a view finder, whether or not the user has glanced through the view finger may be detected so that all-pixel mode is selected only when the glancing through the view finger is detected and that, otherwise, 1/3-row readout mode or 1/5-row readout mode may be selected.

It should be noted that the present disclosure can also have the following configurations:
(1) An imaging control apparatus including:
   a control section adapted to control readout, from a plurality of pixels arranged in an array form for accumulating charge proportional to an amount of incident light as a pixel signal, of the pixel signals, in which
   the control section controls, for all rows of the pixels, row-by-row reset of the plurality of pixels at a constant interval for each row and controls a pixel readout with the pixels skipped in units of a given number of rows.
(2) The imaging control apparatus according to (1), further including:
   a horizontal synchronizing clock signal generation section adapted to generate a horizontal synchronizing clock signal for horizontally defining one column worth of processing, in which
   the control section sequentially performs the row-by-row reset of the pixels one row at a time for each of the horizontal synchronizing clock signals in synchronism with the horizontal synchronizing clock signal.
(3) The imaging control apparatus according to (1) or (2), in which
   the control section controls the pixel readout with the pixels skipped in units of the given number of rows on the basis of a mode switching signal corresponding to an image quality mode of an image including pixel signals captured by the pixels.
(4) The imaging control apparatus according to (3), further including:
   a determination section adapted to determine an operating state of the pixels;
   a setting section adapted to set a mode switching signal that includes information regarding a value corresponding to the given number on a basis of a determination result of the determination section;
   a horizontal synchronizing clock signal generation section adapted to generate a horizontal synchronizing clock signal;
   a counter adapted to count up a the basis of the horizontal synchronizing clock signal; and
   a comparison section adapted to compare a value included in the mode switching signal set by the setting section with a value of the counter and generate a readout pulse when the two values match, in which
   the control section is caused to read out, row by row, the pixels that have been reset on a basis of the readout pulse, and
   the counter is reset when a value included in the mode switching signal set by the setting section and the value of the counter match.
(5) The imaging control apparatus according to (4), further including:
   a frame memory adapted to chronologically store images including pixel signals captured by the pixels, in which
   the determination section determines an operating state of the pixels on a basis of presence or absence of a moving subject in the images through comparison between chronological images stored in the frame memory.
(6) The imaging control apparatus according to (5), in which
   in a case where the determination section determines, as the operating state of the pixels, that a moving subject is present in the image, the control section controls the pixel readout with the pixels skipped from an image including pixel signals captured by the pixels in units of a given number of rows on a basis of a mode switching signal corresponding to a given image quality mode, and
   in a case where the determination section determines, as the operating state of the pixels, that a moving subject is absent in the image, the control section controls the pixel readout with the pixels skipped from the image including pixel signals captured by the pixels in units of the given number of rows on a basis of a mode switching signal corresponding to an image quality mode whose quality is lower than the given image quality.
(7) The imaging control apparatus according to (6), in which
   in a case where the determination section determines, as the operating state of the pixels, that a moving subject is present in the image, the setting section sets a mode switching signal including information regarding a first value as a value corresponding to the given number; and
   the control section is caused to control the pixel readout with the pixels skipped from an image including pixel signals captured by the pixels in units of rows appropriate to the first value included in the mode switching signal corresponding to the given image quality mode, and
   in a case where the determination section determines, as the operating state of the pixels, that a moving subject is absent in the image, the setting section sets a mode switching signal including information regarding a second value larger the first value as a value corresponding to the given number; and
   the control section is caused to control the pixel readout with the pixels skipped from an image including pixel signals captured by the pixels in units of rows appropriate to the second value included in the mode switching signal corresponding to an image quality mode whose quality is lower than the given image quality.
(8) The imaging control apparatus according to (4), further including:
   a drive battery, in which
   the determination section determines the operating state of the pixels on a basis of a level of the battery.
(9) The imaging control apparatus according to (8), in which
   in a case where the determination section determines, on the basis of the level of the battery, and as the operating state of the pixels, that the level of the battery is higher than a given value, the control section is caused to control the pixel readout with the pixels skipped from an image including pixel signals captured by the pixels in units of a given number of rows on a basis of a mode switching signal corresponding to a given image quality mode, and
   in a case where the determination section determines, on the basis of the level of the battery, and as the operating state of the pixels, that the level of the battery is lower than the given value, the control section is caused to control the pixel readout with the pixels skipped from the image including pixel signals captured by the pixels in units of the given number of rows on a basis of a mode switching signal corresponding to an image quality mode whose quality is lower than the given image quality.
(10) The imaging control apparatus according to (9), in which
   in a case where the determination section determines, on the basis of the level of the battery, and as the operating state of the pixels, that the level of the battery is higher than a given value, the setting section sets a mode switching signal including information regarding a first value as a value corresponding to the given number; and
   the control section is caused to control the pixel readout with the pixels skipped from an image including pixel signals captured by the pixels in units of rows appropriate to the first value included in the mode switching signal, and
   in a case where the determination section determines, on a basis of the level of the battery, and as the operating state of the pixels, that the level of the battery is lower than the given value, the setting section sets a mode switching signal including information regarding a second value larger the first value as a value corresponding to the given number; and
   the control section is caused to control the pixel readout with the pixels skipped from an image including pixel signals captured by the pixels in units of rows appropriate to the second value included in the mode switching signal corresponding to an image quality mode whose quality is lower than the given image quality.
(11) The imaging control apparatus according to any one of (1) to (10), further including:
   a horizontal synchronizing clock signal generation section adapted to generate a horizontal synchronizing clock signal for horizontally defining one column worth of processing, in which
   when the pixel readout is performed through the row-by-row skipping in such a manner as to read out the pixels one row every m row, the pixel readout is performed at a time interval m times a horizontal synchronizing clock signal.
(12) The imaging control apparatus according to any one of (1) to (11), in which
   the control section is caused to reset or read out a plurality of pixels row by row through a rolling shutter scheme.
(13) The imaging control apparatus according to any one of (1) to (12), in which
   a CMOS image sensor is used as the plurality of pixels.
(14) An imaging control method including:
   a control step of controlling readout, from a plurality of pixels arranged in an array form for accumulating charge proportional to an amount of incident light as a pixel signal, of the pixel signals, in which
   processes of the control step control, for all rows of the pixels, row-by-row reset of the plurality of pixels at a constant interval for each row and control the pixel readout with the pixels skipped in units of a given number of rows.
(15) An imaging element including:
   a control section adapted to control readout, from a plurality of pixels arranged in an array form for accumulating charge proportional to an amount of incident light as a pixel signal, of the pixel signals, in which
   the control section controls, for all rows of the pixels, row-by-row reset of the plurality of pixels at a constant interval for each row and controls the pixel readout with the pixels skipped in units of a given number of rows.

### [Reference Signs List]

11 Imaging apparatus, 20 Optical block, 21 Image sensor, 22 Signal processing section, 23 Display section, 31 Frame memory, 32 State determination section, 33 Imaging element control section, 34 Camera signal processing section, 35 Display control section, 51 Pixel array, 52 Vertical transfer control section, 53 H synchronizing clock generation section, 54 Horizontal transfer control section, 55 Image processing section, 101 Photodiode, 102 Transfer transistor, 103 Floating diffusion (FD), 104 Reset transistor, 105 Amplifying transistor, 106 Select transistor, 121 Readout counter, 122 Comparator, 141 Image sensor

## Claims

1. An imaging control apparatus comprising:
a control section adapted to control readout, from a plurality of pixels arranged in an array form for accumulating charge proportional to an amount of incident light as a pixel signal, of the pixel signals, wherein
the control section controls, for all rows of the pixels, row-by-row reset of the plurality of pixels at a constant interval for each row and controls a pixel readout with the pixels skipped in units of a given number of rows.

2. The imaging control apparatus according to claim 1, further comprising:
a horizontal synchronizing clock signal generation section adapted to generate a horizontal synchronizing clock signal for horizontally defining one column worth of processing, wherein
the control section sequentially performs the row-by-row reset of the pixels one row at a time for each of the horizontal synchronizing clock signals in synchronism with the horizontal synchronizing clock signal.

3. The imaging control apparatus according to claim 1, wherein
the control section controls the pixel readout with the pixels skipped in units of the given number of rows on the basis of a mode switching signal corresponding to an image quality mode of an image including pixel signals captured by the pixels.

4. The imaging control apparatus according to claim 3, further comprising:
a determination section adapted to determine an operating state of the pixels;
a setting section adapted to set a mode switching signal that includes information regarding a value corresponding to the given number on a basis of a determination result of the determination section;
a horizontal synchronizing clock signal generation section adapted to generate a horizontal synchronizing clock signal;
a counter adapted to count up a the basis of the horizontal synchronizing clock signal; and
a comparison section adapted to compare a value included in the mode switching signal set by the setting section with a value of the counter and generate a readout pulse when the two values match, wherein
the control section is caused to read out, row by row, the pixels that have been reset on a basis of the readout pulse, and
the counter is reset when a value included in the mode switching signal set by the setting section and the value of the counter match.

5. The imaging control apparatus according to claim 4, further comprising:
a frame memory adapted to chronologically store images including pixel signals captured by the pixels, wherein
the determination section determines an operating state of the pixels through comparison between chronological images stored in the frame memory on a basis of presence or absence of a moving subject in the images.

6. The imaging control apparatus according to claim 5, wherein
in a case where the determination section determines, as the operating state of the pixels, that a moving subject is present in the image, the control section controls the pixel readout with the pixels skipped from an image including pixel signals captured by the pixels in units of a given number of rows on a basis of a mode switching signal corresponding to a given image quality mode, and
in a case where the determination section determines, as the operating state of the pixels, that a moving subject is absent in the image, the control section controls the pixel readout with the pixels skipped from the image including pixel signals captured by the pixels in units of the given number of rows on a basis of a mode switching signal corresponding to an image quality mode whose quality is lower than the given image quality.

7. The imaging control apparatus according to claim 6, wherein
in a case where the determination section determines, as the operating state of the pixels, that a moving subject is present in the image, the setting section sets a mode switching signal including information regarding a first value as a value corresponding to the given number; and
the control section is caused to control the pixel readout with the pixels skipped from an image including pixel signals captured by the pixels in units of rows appropriate to the first value included in the mode switching signal corresponding to the given image quality mode, and
in a case where the determination section determines, as the operating state of the pixels, that a moving subject is absent in the image, the setting section sets a mode switching signal including information regarding a second value larger the first value as a value corresponding to the given number; and
the control section is caused to control the pixel readout with the pixels skipped from an image including pixel signals captured by the pixels in units of rows appropriate to the second value included in the mode switching signal corresponding to an image quality mode whose quality is lower than the given image quality.

8. The imaging control apparatus according to claim 4, further comprising:
a drive battery, wherein
the determination section determines the operating state of the pixels on a basis of a level of the battery.

9. The imaging control apparatus of claim 8, wherein
in a case where the determination section determines, on the basis of the level of the battery, and as the operating state of the pixels, that the level of the battery is higher than a given value, the control section is caused to control the pixel readout with the pixels skipped from an image including pixel signals captured by the pixels in units of a given number of rows on a basis of a mode switching signal corresponding to a given image quality mode, and
in a case where the determination section determines, on the basis of the level of the battery, and as the operating state of the pixels, that the level of the battery is lower than the given value, the control section is caused to control the pixel readout with the pixels skipped from the image including pixel signals captured by the pixels in units of the given number of rows on a basis of a mode switching signal corresponding to an image quality mode whose quality is lower than the given image quality.

10. The imaging control apparatus according to claim 9, wherein
in a case where the determination section determines, on the basis of the level of the battery, and as the operating state of the pixels, that the level of the battery is higher than a given value, the setting section sets a mode switching signal including information regarding a first value as a value corresponding to the given number; and
the control section is caused to control the pixel readout with the pixels skipped from an image including pixel signals captured by the pixels in units of rows appropriate to the first value included in the mode switching signal, and
in a case where the determination section determines, on a basis of the level of the battery, and as the operating state of the pixels, that the level of the battery is lower than the given value, the setting section sets a mode switching signal including information regarding a second value larger the first value as a value corresponding to the given number; and
the control section is caused to control the pixel readout with the pixels skipped from an image including pixel signals captured by the pixels in units of rows appropriate to the second value included in the mode switching signal corresponding to an image quality mode whose quality is lower than the given image quality.

11. The imaging control apparatus according to claim 1, further comprising:
a horizontal synchronizing clock signal generation section adapted to generate a horizontal synchronizing clock signal for horizontally defining one column worth of processing, wherein
when the pixel readout is performed through the row-by-row skipping in such a manner as to read out the pixels one row every m row, the pixel readout is performed at a time interval m times a horizontal synchronizing clock signal.

12. The imaging control apparatus according to claim 1, wherein
the control section is caused to reset or read out a plurality of pixels row by row through a rolling shutter scheme.

13. The imaging control apparatus according to claim 1, wherein
a CMOS image sensor is used as the plurality of pixels.

14. An imaging control method comprising:
a control step of controlling readout, from a plurality of pixels arranged in an array form for accumulating charge proportional to an amount of incident light as a pixel signal, of the pixel signals, wherein
processes of the control step control, for all rows of the pixels, row-by-row reset of the plurality of pixels at a constant interval for each row and control the pixel readout with the pixels skipped in units of a given number of rows.

15. An imaging element comprising:
a control section adapted to control readout, from a plurality of pixels arranged in an array form for accumulating charge proportional to an amount of incident light as a pixel signal, of the pixel signals, wherein
the control section controls, for all rows of the pixels, row-by-row reset of the plurality of pixels at a constant interval for each row and controls the pixel readout with the pixels skipped in units of a given number of rows.
